# EUROPEAN PATENT APPLICATION

(11) **EP 0 994 430 A2**
(43) Date of publication of application: **19.04.2000**
(21) Application number: 99306502.8
(22) Date of filing: 18.08.1999
(51) Int. Cl.: G06F 17/60

(54) **Contents management method**

(30) Priority: 12.10.1998 JP 28927298
(71) Applicant: HITACHI, LTD., Chiyoda-ku, Tokyo (JP)
(72) Inventor: Yonezawa, Kei, Yokohama-shi (JP); Rissen, Kazumi, Kawasaki-shi (JP); Takeda, Hirotoshi, Tokyo (JP); Ishikawa, Manabu, Yokohama-shi (JP)
(74) Representative: Calderbank, Thomas Roger

(57) **Abstract**

Page access log information (500), answer log information (600) and click log information (700) record the access counts to respective contents. A contents check list (400) sets values corresponding to an aimed value of the access contents to contents as a target, and sets a measure when the contents do not obtain the aimed value. A contents server (100) refers to a corresponding log, and sums the access count to contents from the start date of commence of release of the contents to the latest date when the log can be acquired on the day of check before the time limit of appreciation. The contents server (100) refers to the list (400), and checks whether this access count has reached its aimed value or not. When the access count has not reached the aimed value, the contents server (100) performs a measure for the contents. In such a manner, in an information delivery system, it is checked upon each delivered contents whether an aimed quantity of sending value is generated before its time limit of appreciation. Contents which have not generated a sending value are subjected to a measure corresponding to the contents.

## Description

The present invention relates to an information delivery system that delivers information through a network, and particularly relates to a contents management method for managing information to be delivered in view of a life cycle of the value of the information.

With the advance of information technique, the servicing of network infrastructures and the popularization of personal computers, information delivery services through networks represented by WWW (World Wide Web) have spread rapidly.

Information delivery services through networks are roughly classified into two according to their forms. One is a service taking such a form that a transmitter side has the initiative of delivery. Mail magazines and so on sent through electronic mails apply to this. This is suitable for delivery of information which is small in the data amount and which demands promptitude. The other is a form such as WWW in which information is accumulated on a server machine in an information delivery site, and delivered in response to a request from a user as a trigger. This form can deal with a comparatively large amount of data. In some services belonging to this form, client software may take out information without any user's specific request so that the information externally looks as if it is delivered automatically.

In such information delivery services, text or expression of the information is processed and edited into a unity called contents before it is provided for users. For example, in WWW, a page or a unity of pages, an independent corner in a page, etc. are all contents.

Of the information delivery services, particularly site-implemented information delivery services mentioned above are increasing conspicuously. However, with the increase of the services, the existence of contents left in just the state they were created has become recognized. In the present situation, even in a site having a contents manager regularly, it may be difficult for the manager to grasp the conditions of all the contents as the amount of the contents increases and gets complicated. Thus, of the contents, due to insufficiency of maintenance, some may be left without updating though their information are out of date, or some may have a mismatch in the link caused by updating other contents.

For coping with such a problem, various site management tools for supporting contents managers have been used. Such site management tools provide functions necessary for the management of contents in a site, such as a series of working from creating contents to testing of link confirmation and so on, exchanging page data, and analyzing access logs after the contents are released, as well as working environment with improved operations based on GUI. Some tools also have a function capable of controlling opening and closing of contents automatically based on preset date and time.

These conventional techniques have problems as follows. That is, it is desired to attract a larger number of accesses when contents has a high value because the value of information varies as time goes by. However, the conventional site management tools cannot manage contents currently opened to the public in view of the value of information included in the contents. Some tools having a function of analyzing access logs can output the sum of logs in a short cycle, but basically the contents manager of the site himself has to confirm and analyze the logs and feed them back to the contents consciously. In addition, the function of controlling the time of contents such as opening or closing the contents to the public can only bring the contents into an open or closed state when predetermined time has passed, and hence cannot cope with a change of conditions viewed in the value of information.

For example, some sites carrying advertisements with a fee adopt a system to guarantee predetermined access counts to advertisement. However, as a matter of fact, advertisements are merely put on pages expected to have certain access counts, and the period to put the advertisements is prolonged without a fee if the predetermined access counts cannot be obtained for the period of contract. Thus, there is a difference between the period to put the advertisements and the period to desire to propagate the products, so that the effect of the advertisements is reduced by half even if the period to put the advertisements is prolonged.

In the case of other media existing at present, the value of information is put in question mainly when the information is sent in the first place. Rebroadcasts of television programs, back numbers of magazines, reprinted publications and so on are concluded that they are old information as they are, apart from the problem so to whether they are regarded as classics or out-of-date.

On the other hand, the value of information circulating on a network is put in question at the time when they are delivered to users. There is not much of a question in information such as electronic mails in which transmission and reception are performed substantially simultaneously. However, in a site-implemented information delivery service, there is a time lag between the time when contents are registered in a server and the time when the contents are taken out by users. The information may be stale before users take it out. Further, in contents expected to be accessed repeatedly, it is fated that the value of the contents is attenuated gradually because users get "tired" of the contents.

Therefore, in such a site-implemented information delivery service, it is impossible to appropriately provide information useful for users if the life cycle of the value of information to be delivered over a period when the information is in a server is not grasped.

The value of information herein means a value for a person receiving the information. Of course, any advertisement has an artistic or historiographic profile, and such a kind of value hardly changes as time goes by. However, the primary value as advertisement is to provide information for persons who want to buy products, and it changes in accordance with the life cycle of the advertised products.

Values of some information change conspicuously, and they may be called "perishables" having a term of validity in utility value. For example, contents for giving a notice about an event or accepting entries for the event lose their value after the event is over. The date of the event may be a time limit of validity.

A turning point in a time base where the value of information is lost or where the value of information is reduced suddenly is defined as a time limit of appreciation for the information. Although there are some cases where the time limit of appreciation can be fixed on a specific date as in the above-mentioned example of information about an event, often the time limit of appreciation may be specified only as sometime within a certain period. Examples of information having a time limit of appreciation include information about current news, contents peculiar to a season, etc, as well as event information and advertisements as mentioned above.

Contents which have been once sent include a secondary value generated by a fact that a person who receives the contents feels a value at the information. This is called a sending value of contents. Most contents are delivered in order to generate such a sending value rather than provide an information value belonging to the contents themselves.

For catalogue contents providing information about products, sales of the products are easy-to-understand examples of the sending value of contents. Of course, the sending value is not measured only on a financial scale. For questionnaire contents asking users' opinions, users' responses thereto may be regarded as generation of a sending value.

The total amount of the generated sending value depends on the number of users appreciating the information. The total amount varies therefore in accordance with the contents of the information. It is desired that there are more accesses to the contents so long as the contents is opened to the public. However, for example, between contents for an exhibition expected to be visited by an attendance of tens of thousands and contents for a private show by an attendance of about a few hundred, which are both event information, not only a target class for whom the information is provided but also the number of persons from whom feedback is expected are different in scale in the first place.

Since the sending value of contents is generated as a result of users' accesses, it is natural that no sending value should be generated from valueless contents after the time limit of appreciation.

Therefore, in order to generate a sending value expected from contents, it is necessary for a manager of the contents to take appropriate measures before the time limit of appreciation.

It is an object of the present invention to provide a contents management method which checks whether contents delivered in an information delivery system generate an aimed amount of sending value or not before the time limit of appreciation.

It is another object of the invention to provide a contents management method which takes measures for contents judged not to generate an aimed amount of sending value.

The contents management method according to the present invention is characterized by counting the access count from information requesters to contents from the date when the contents were released up to a predetermined date, and judging whether the access count has reached a predetermined aimed value or not. Here the predetermined date and the date when the judgement is performed are before the date (time limit of appreciation) when the value of the information will be lost or reduced thereafter.

In addition, the contents management method according to the present invention is characterized by, when the access count to the contents has not reached the aimed value, taking such measures that the released page contents are replaced by an alternative page, or the frequency in showing the advertisement contents is changed to thereby increase the frequency in showing.

### In the drawings:

Fig. 1 is a block diagram illustrating an example of configuration of an information delivery system in an embodiment of the present invention;
Fig. 2 is an illustration of a data structure of a contents management table 200 in the embodiment;
Fig. 3 is an illustration of a data structure of an advertisement management table 300 in the embodiment;
Fig. 4 is an illustration of a data structure of a contents check list 400 in the embodiment;
Fig. 5 is an illustration of an example of data of page access log information 500;
Fig. 6 is an illustration of an example of data of answer log information 600;
Fig. 7 is an illustration of an example of data of click log information 700;
Fig. 8 is a flow chart showing a process for summing up an accumulated total from an access log for contents as a target of the embodiment;
Fig. 9 is an illustration of an example of data of a contents check log 900;
Fig. 10 is a flow chart showing a process for judgement/measure of check result in the embodiment;
Figs. 11A and 11B are views illustrating examples of data of an alternative page;
Fig. 12 is an illustration of a data structure of a judgment table 1200 in the embodiment;
Fig. 13 is an illustration of an example of data of a display frequency change table 1400; and
Fig. 14 is a flow chart showing a process for changing display frequencies in the embodiment.

An embodiment of the present invention will be described under with reference to the drawings.

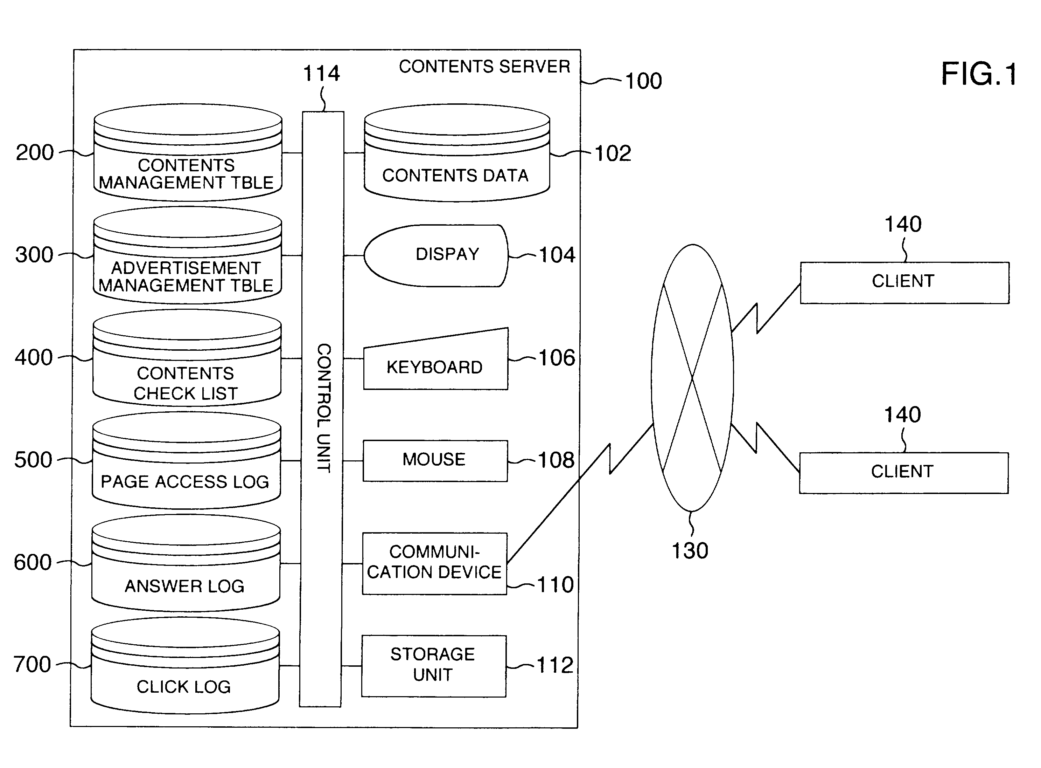

Fig. 1 is a block diagram illustrating an example of configuration of an information delivery system in this embodiment. In Fig. 1, a contents server 100 is a computer delivering information. In the contents server 100, the reference numeral 102 represents contents data to be delivered, and a contents manager performs management operations such as registration, maintenance, etc. of the contents data 102 through input/output devices such as a display 104, a keyboard 106 and a mouse 108. A communication device 110 is connected with a network 130, and communicates with clients 140 so as to transmit and receive data. Various programs are stored in a storage unit 112 as a memory (main memory). A control unit 114 reads the programs and controls various devices while performing delivery and management of the contents data 102.

In this embodiment, it is assumed that information is delivered to the clients 140 by use of functions as a WWW server. When a user accesses information, a request is first issued from a client 140 which is an information requester. When the contents server 100 which is an information maintainer receives the request, the contents server 100 selects, from the contents data 102, contents to be sent corresponding to the request, and sends the selected contents to the requester. Thus, the client 140 displays and outputs the received data.

As data referred to in the management and delivery of the contents data 102, a contents management table 200, an advertisement management table 300 and a contents check list 400 are provided in advance on a storage unit such as a disk connected to the control unit 114. In addition, page access log information 500, answer long information 600 and click log information 700 are generated on the same storage unit in accordance with accesses to the contents.

A program for managing contents, as will be described in detail hereunder, may be stored in a storage medium, and read into the storage unit 112 through a driving unit connected to the control unit 114, or transmitted to the contents server 100 through a driving unit of another computer, a memory of another computer, and a network, and read into the storage unit 112. The program read thus can be executed.

These device arrangements are made by way of example. It goes without saying that other arrangements may be adopted. For example, although a contents manager performs management operations of the contents directly with the input/output devices of the contents server 100 in this embodiment, such operations may be performed from another computer through a network. A local network may be provided on the contents server 100 side so as to decentralize data or functions over a plurality of computers, or to perform maintenance such as updating through the local network while using an open network such as Internet for delivering information.

It will go well if the client terminal 140 in which a user can see information has enough functions and performance to perform communication and output of information. Personal computers, portable terminals, set top boxes for CATV, or various dedicated terminals may be used.

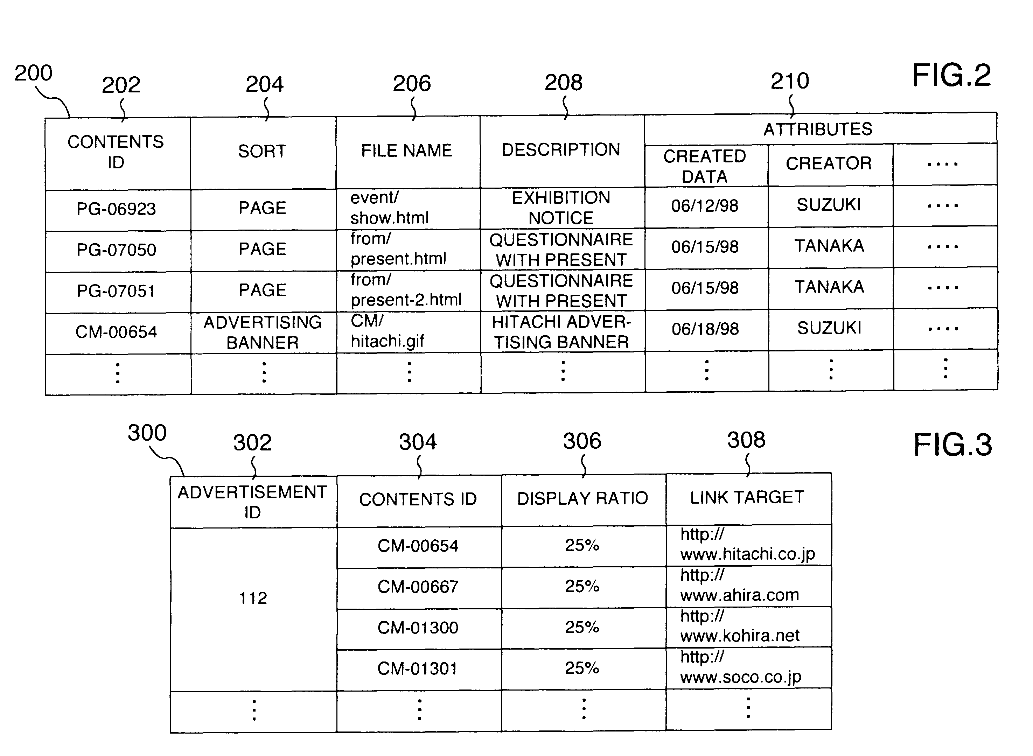

Fig. 2 is an illustration of a data structure of the contents management table 200. A contents ID 202 designates an identifier for identifying individual contents. A sort 204 designates a sort of contents. The sorts of contents are divided into two, Page and Advertising Banner in this example. The Advertising Banner means contents displayed in an advertisement area provided in a page. The Page means general information contents displayed in a screen area except the advertising banner area. A file name 206 designates a name of a file storing the data substance of contents. Description 208 includes a comment sentence describing the details of the contents. An attribute 210 includes attribute data necessary for management of contents, such as a creation date, a creator, etc.

Fig. 3 is an illustration of a data structure of the advertisement management table 300. An advertisement ID 302 designates an identifier for identifying a group of plural advertisements to be displayed in one and the same advertisement area. A contents ID 304 designates an identifier for identifying an individual advertising banner belonging to the advertisement group. A display ratio 306 designates a ratio with which the advertising banner is to be displayed in the advertisement group. A link target 308 designates a network address of a site which will be a jump target when the advertising banner is clicked. Generally one advertising banner can belong to plural advertisement groups. However, in order to simplify the description hereafter, assume that each advertising banner belongs to one group.

When a page is requested from a client 140, the contents server 100 extracts data describing a process for displaying the page from an specified file, and interprets the data. When an instruction to display advertisements specified by an advertisement ID 302 is given for an advertisement area of the page, the contents server 100 refers to the advertisement management table 300, acquires contents IDs 304 belonging to the specified advertisement ID 302, display ratios 306 and link targets 308, and selects one of the advertisement contents 304 in accordance with the display ratios 306 using a table of random numbers. Next, the contents server 100 acquires a file name 206 of a contents ID202 corresponding to the selected advertisement with reference to the contents management table 200, extracts a data substance specified by the file name 206, embeds the data substance in a specified place of the requested page while embedding the link target 308 of the selected advertisement, and transmits the requested page to the client 140. The client 140 interprets the received process for displaying the page, and displays the advertising banner embedded in the advertisement area on the display unit, as well as general information of the page. In such a manner, each advertising banner in one and the same group is displayed at a ratio set in its corresponding display ratio 306. When the advertising banner displayed at the present moment is clicked by the user of the client 140, the client 140 makes a request to the site of the embedded link target 308 for detailed advertisement information. Thus, the client 140 displays the acquired advertisement information on the display unit.

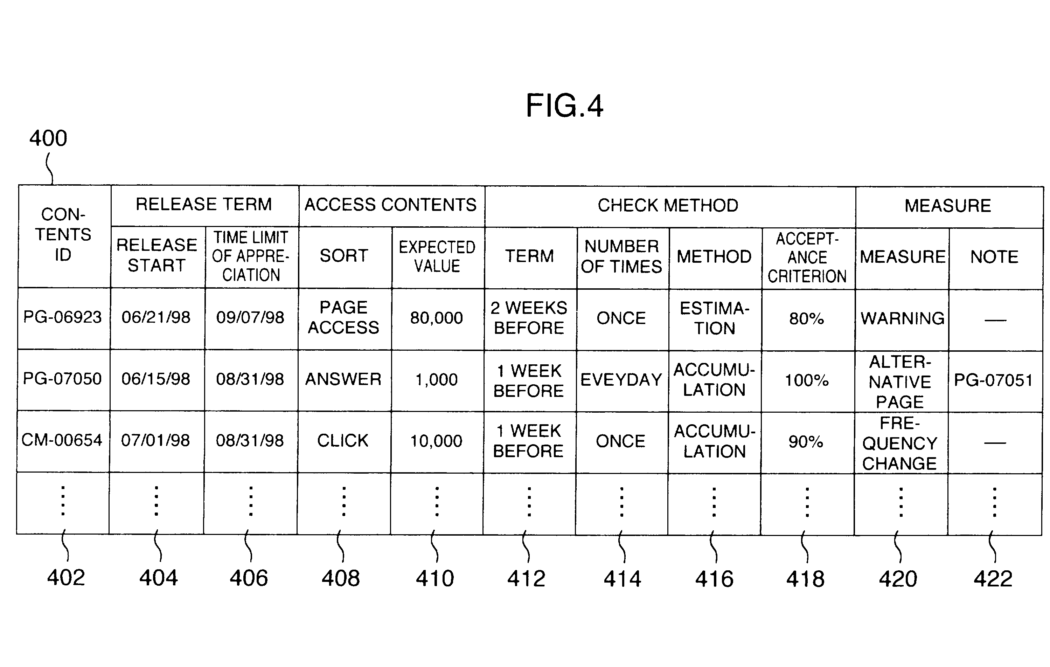

Fig. 4 is an illustration of a data structure of the contents check list 400. A contents ID 402 designates an identifier for identifying contents to be checked, which contents have been registered in the contents management table 200. A release start 404 designates a date when contents started to be released. A time limit of appreciation 406 designates a term of validity for the contents. The time limit of appreciation 406 means not a date for closing the contents but a term set for check. A sort 408 and an expected value 410 in the access contents define the sort and access count to contents as a target of check. In this embodiment, as for the sorts of accesses, two sorts of accesses, that is, a page access and an access with an answer may be established for page contents, while an access with a click of advertisement may be set for advertising banner contents.

In some kinds of contents, it is more important to obtain reaction from users than to have the users see. The answering access and the clicking access are indexes for measuring such sending values of contents. The answering access makes it a criterion as to whether a manifest will expression, that is, an answer from a user was obtained or not. For example, answering to a questionnaire, subscribing to an invitation, posting a message on a bulletin board, ordering goods appearing on a catalog, and so on are applicable thereto. On the other hand, the number of clicks of an advertising banner reflects the access count in which users clicked the advertising banner to demand detailed information, that is, in which the users could be attracted to the contents of the advertisement.

A term 412 in the check method of contents designates a term of making a check, so that it is set how many days before the time limit of appreciation 406 a check should be made. A number of times 414 sets a number of times of checks. In this embodiment, either is set, a check performed only once when the term 412 has been passed or a check performed once everyday till the term 412 has been passed thereafter. A method 416 defines a check method. "Accumulation" means that a total access count accumulated from the release start 404 through the last day when log information was gathered is used as it is, for comparison with the expected value 410. "Estimation" means that an estimated total access count till the time limit of appreciation obtained by adding a value estimated from the last day to the time limit of appreciation to the above-mentioned access count accumulated from the release start 404 through the last day is used for comparison with the expected value 410. An acceptance criterion 418 sets a lower limit of an achievement ratio for making judgement as to whether the actual or estimated value of the access count has achieved its aimed value, that is, a lower limit of (the accumulated or estimated value of accesses) / (the expected value 410 of accesses). The expected value 410 is a theoretical value, if anything. In most cases the expected value 410 is expressed such that "x access count is required as a total" or "(x access count required a day)×(number of release days)". On the other hand, the acceptance criterion 418 indicates how many access count can be regarded as achieving the aimed value substantially, taking into consideration the fact that the check is performed before the time limit of appreciation.

A measure 420 defines a process which is executed when it is concluded, as a result of checking the contents, that the acceptance criterion 418 has not been achieved. "Warning" designates an issue of a message warning that the aimed value has not been achieved to the contents manager. "Alternative page" designates a process for replacing the page contents released currently by an alternative page. A note 422 designates a contents ID of a page prepared as the alternative page. "Display frequency" designates a process for changing the display frequency of the advertising banner contents.

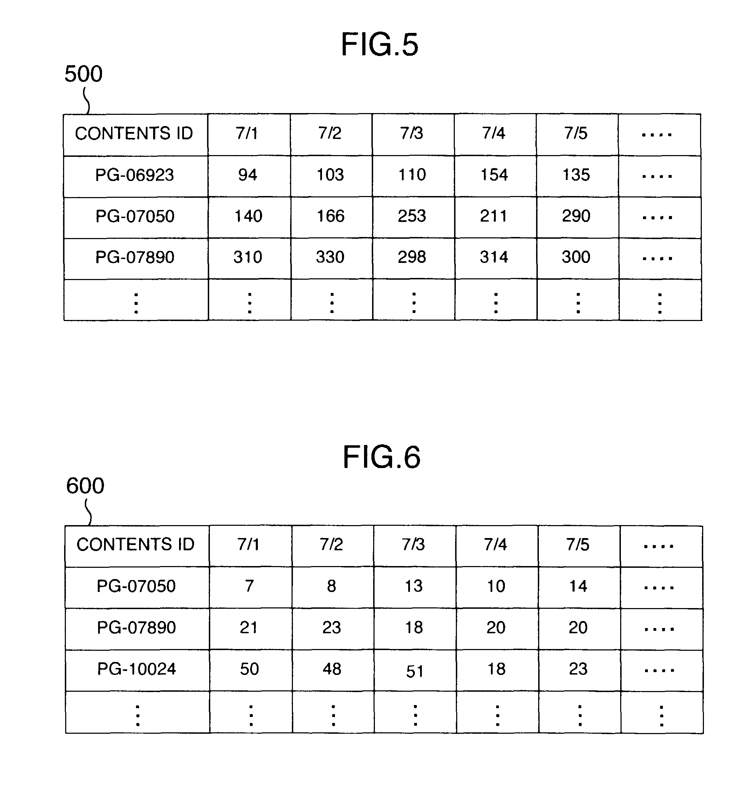

Fig. 5 is an illustration of an example of data of the page access log information 500. The page access log information 500 is a table in which the access count to each page contents is recorded by day. Data in this table may be counted up as soon as an access to each page is made, or summing may be done by batch processing, for example, from WWW server access log data.

Fig. 6 is an illustration of an example of data of the answer log information 600. The answer log information 600 is a table in which the number of times for users to make a manifest response to each delivered page contents is recorded by day. The number of answer accesses is counted up as soon as a response is received from a user.

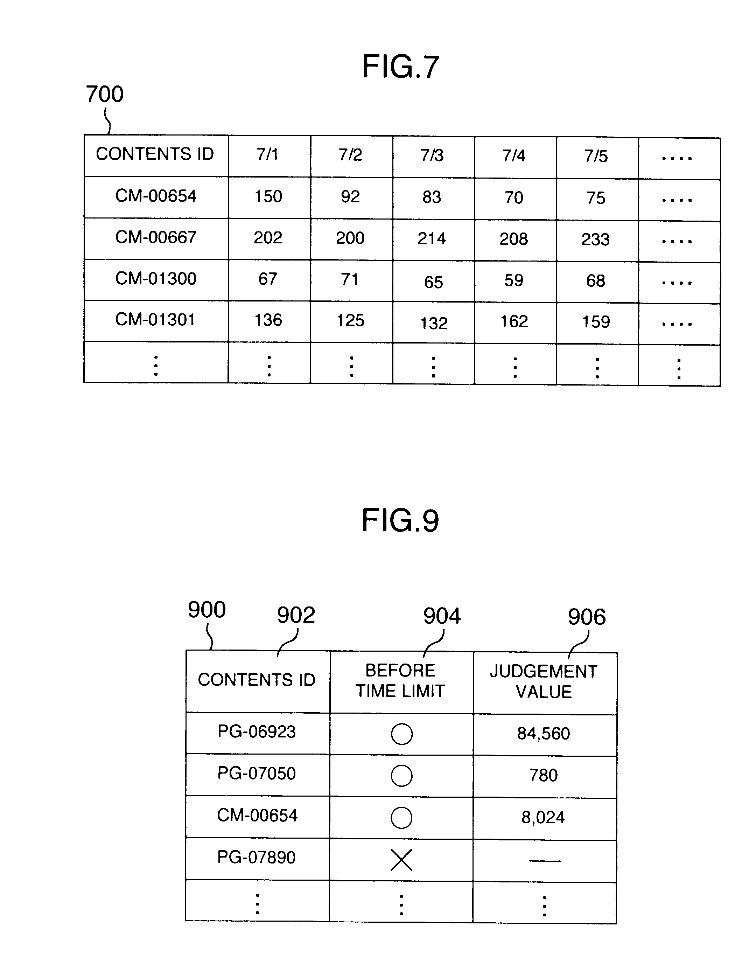

Fig. 7 is an illustration of an example of data of the click log information 700. The click log information 700 is a table in which the number of times for users to click each advertising banner and access its related site is recorded. The number of click accesses is counted up as soon as the advertising banner is clicked for a jump to its corresponding link target 308.

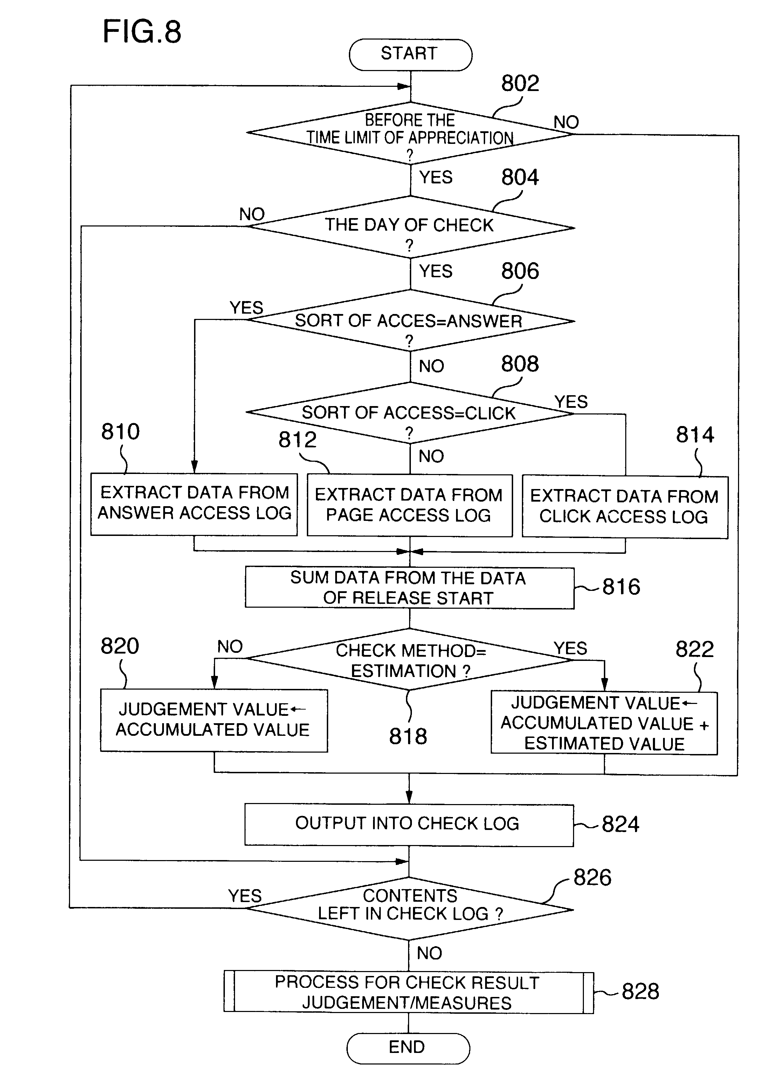

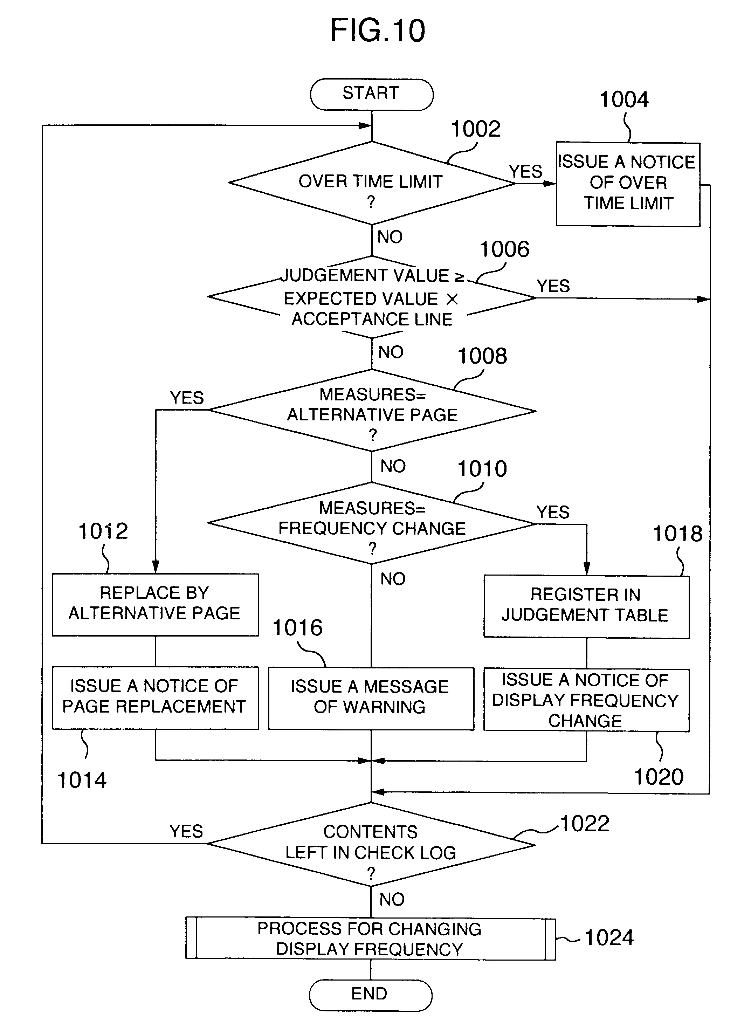

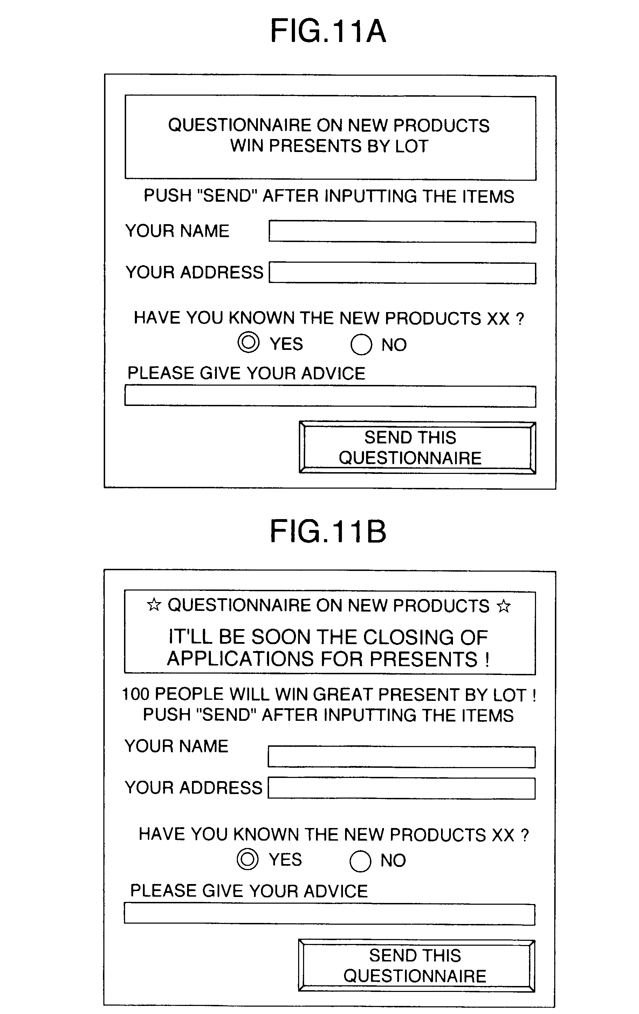

Next, using flow charts of Figs. 8, 10 and 14, description will be made about a process for checking the access count of contents in an information delivery system to which the present invention has been applied. This check is performed automatically once a day, and a notice of the results is given to the contents manager. Figs. 9, 12 and 13 show data made up in the process, and Figs. 11A and 11B show examples of a screen in which a page is alternated with another.

Fig. 8 is a flow chart showing a flow of processing for obtaining an accumulated value from access log information about contents as a target of check. The contents server 100 refers to the time limit of appreciation 406 for contents on the contents check list 400, and judges whether it is before the time limit of appreciation or not (Step 802). If it is before the time limit of appreciation (YES in Step 802), the contents server 100 judges whether today is the day of the check or not, based on the time limit of appreciation 406, the check term 412 and the number of times 414 (Step 804). If it is the day of check (YES in Step 804), the contents server 100 inquires the sort 408 of the access (Steps 806 and 808). If the sort of the access is Answer (YES in Step 806), the contents server 100 extracts log information of the contents from the answer log information 600 (Step 810). If the sort of the access is Page Access (NO in Step 806 and NO in Step 808), the contents server 100 extracts log information of the contents from the page access log information 500 (Step 812). If the sort of the access is Click (YES in Step 808), the contents server 100 extracts log information of the contents from the click log information 700 (Step 814). Next, with regard to the extracted data, the contents server 100 sums the access count in each date from the release start 404 through the latest date so as to obtain an accumulating value (Step 816).

If the method 416 in the check is Accumulation (NO in Step 818), the obtained accumulating value is set as a judgement value as it is (Step 820). If the method 416 in the check is Estimation (YES in Step 818), a value obtained by adding an estimated value of the access count from the day following the latest date recorded in the log information to the time limit of appreciation to the obtained accumulating value is set as a judgement value (Step 822). The simplest method for obtaining an estimated value of the access count from the latest date recorded in the log is to calculate it by multiplying the access count on the latest date or an average value of the access count in each date by the number of the rest days till the time limit of appreciation. To estimate the access count more accurately, it is calculated including a pattern of fluctuation in the access count as a factor. That is, the calculation is performed taking into consideration a periodical change in the access count according to days of the week or hours of the day, a ratio of expansion near the day of check, actual results in similar contents in the past, and so on.

Next, the obtained judgement value is recorded in the contents check log 900 (Step 824). Fig. 9 shows an example of data of the contents check log 900. The reference numeral 902 represents a contents ID of checked contents, and 904 represents a result of inquiry whether it is before the time limit of appreciation or not. The symbol ○ indicates that the time limit of appreciation is not over, while × indicates it is over. The reference numeral 906 represents a judgement value calculated. If the next contents to be processed exist in the contents check list 400 (YES in Step 826), the contents server 100 returns to Step 802, and repeats the above processing. If the day of processing is not on the day of check for the contents (NO in Step 804), the contents server 100 advances to Step 826. If it is over the time limit of appreciation of the contents (NO in Step 802), the contents server 100 advances to Step 824. When all the contents on the contents check list 400 have been processed (NO in Step 826), the contents server 100 performs a process for check result judgement/measure (Step 828).

Fig. 10 is a flow chart showing the flow of the process for check result judgement/measure. The contents server 100 refers to the before-time-limit 904 upon the next contents on the contents check log 900 so as to judge whether it is over the time limit of appreciation or not (Step 1002). If it is over the time limit (YES in Step 1002), the contents server 100 issues an over-time-limit notice message to the contents manager (Step 1004), and goes to Step 1022. If it is not over the time limit (NO in Step 1002), the contents server 100 refers to the contents check list 400 upon the contents so as to judge whether the judgement value 906 has reached the aimed value or not (Step 1006). If (judgement value 906) ≧ (expected value 410)×(acceptance criterion 418) (YES in Step 1006), the contents server 100 regards that the aimed value has achieved, and goes to Step 1022. If the aimed value has not been achieved (NO in Step 1006), the contents server 100 refers to the measure 420 upon the contents. If the measure 420 indicates replacement with an alternative page (YES in Step 1008), the contents server 100 changes the setting of links or the like so as to display the page set in the note 422 (Step 1012). When the replacement with the alternative page 422 has been completed, the contents server 100 gives the contents manager a notice that the contents have been replaced by the alternative contents in accordance with the setting because this contents could not obtain the aimed access count (Step 1014), and goes to Step 1022.

Figs. 11A and 11B show examples of screen when replacement with an alternative page is performed. Figs. 11A and 11B show subscription pages for a questionnaire with a present. Fig. 11A shows an old page while Fig. 11B shows an alternative page with which the old page has been replaced. The alternative page has contents emphasizing the closing of the present, appealing to users so as to give a sense of urgency to them, and prompting the users to answer the questionnaire. If the closing of the questionnaire is set on the time limit of appreciation in advance, whether an aimed amount of answers have been obtained can be checked thus before the closing day, and a measure can be taken in advance, so that an expected value can be extracted from the contents. Although only replacement of the contents concerned is performed in this embodiment, a more effective measure to improve the access count can be realized if alternative contents for other contents related thereto, that is, main linkers to the contents, such as a menu on the top page, are registered in advance, and the display of those contents are changed at the same time.

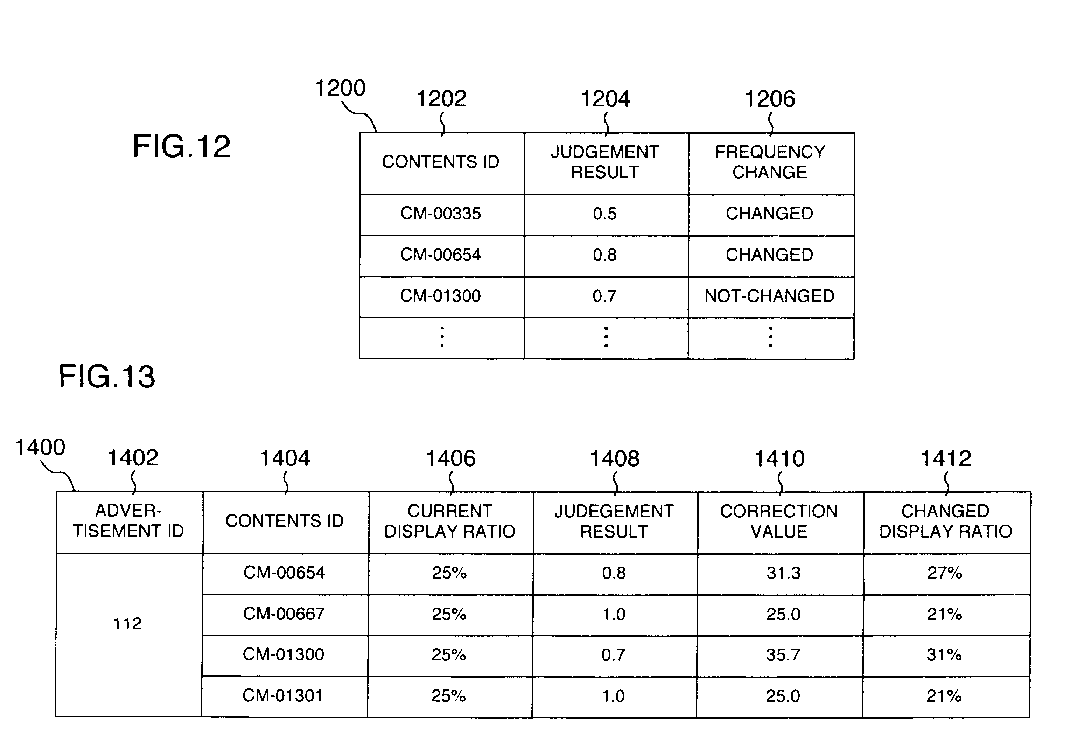

If the measure 420 designates changing the display frequency (NO in Step 1008, and YES in Step 1010), the result is registered in a judgement result 1204 of a judgement table 1200 shown in Fig. 12 (Step 1018). The judgement result is a ratio of the judgement value 906 to (expected access value 410)×(acceptance criterion 418). Next, the contents server 100 gives the contents manager a notice that the display frequency of the advertising banners is changed (Step 1020).

Fig. 12 is an illustration of a data structure of the judgement table 1200. A contents ID 1202 designates a contents ID of an advertisement the number of clicks of which has not reached its aimed value, and the judgement result 1204 designates the above-mentioned judgement result. A frequency change 1206 is a flag showing a state whether a process for changing the frequency has been performed or not, and there is stored a flag which shows that the process has not been performed when the contents are registered in the judgement table 1200.

The reason why the process for changing the display frequency is not preformed immediately during the process for taking measures is that the process for changing the display frequency is difficult to be performed only based on the judgement result of the contents. It is true that other processes for taking measures may be also performed in a lump after all the process for judging contents. However, particularly the process for changing the display frequency of contents gives influence on the display frequencies of other contents. Therefore, in order to perform the process for changing the display frequency while keeping the whole balance, it is necessary to perform the process after all the contents influencing each other have been judged. There can be such a case that increasing the display frequency of one contents simply based on the judgement result of the contents results in that the display frequencies of other contents desired to increase are reduced inversely. In order to prevent such a case, the judgement result is once stored in the judgement table 1200 shown in Fig. 12, and the process for changing the display frequencies is performed in a lump after the process for judgement upon the check results of each contents has been terminated.

If the measure 420 designates a warning process (NO in Step 1008, and NO in Step 1010), the contents server 100 issues to the contents manager a message warning that the contents have not obtained the aimed access count (Step 1016). Examples of the method for giving a message to the contents manager including this warning message include a method of outputting the result of judgement into a file as a log, a method of giving it by sending an electronic mail, a more aggressive method of outputting a warning screen on the display 104 to press the manager for attention, and so on. Since the importance of the message varies in accordance with contents, it is desired to use these methods together as a practical matter. For example, a warning screen is produced for contents having an exceptionally low achievement ratio of its aimed value; a warning screen is produced for important contents registered in advance; and so on.

When processing has been terminated about all the contents recorded in the contents check log 900 (NO in Step 1022), the contents server 100 performs a process for changing display frequencies of advertising banners (Step 1024).

Fig. 13 is an illustration of an example of data of a display frequency change table 1400. An advertisement ID 1402, a contents ID 1404 and a current display ratio 1406 correspond to the advertisement ID 302, the contents ID 304 and the display ratio 306 in the advertisement management table 300 respectively. A judgement result 1408 corresponds to that which is calculated in Step 1018 and registered in the judgement result 1204. A correction value 1410 is obtained by multiplying the display ratio 1406 by 1/(judgement result 1408). A changed display ratio 1412 is a value obtained by re-allocating respective correction values 1410 in the same advertisement group so that the correction values 1410 total up to 100%. The changed display ratio 1412 designates a display ratio after the display frequency has been changed.

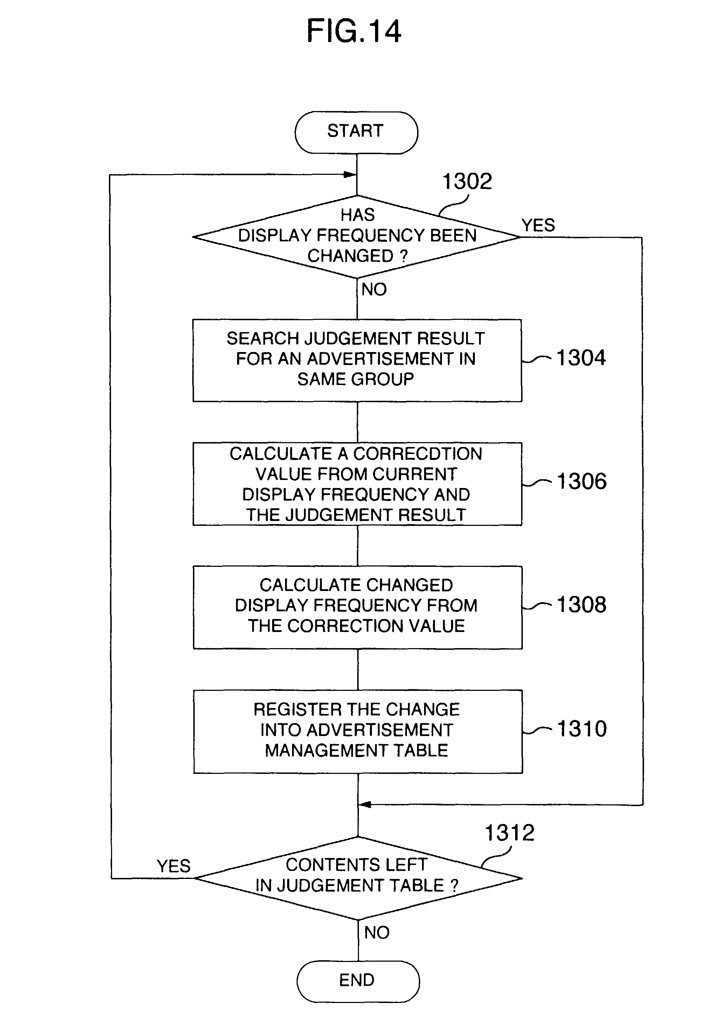

Fig. 14 is a flow chart showing the flow of the process for changing the display frequencies. The contents server 100 refers to the frequency change 1206 about the next contents on the judgement table 1200 so as to judge whether the process for changing the display frequency has been terminated or not (Step 1302). If the process for changing the display frequency has been terminated (YES in Step 1302), the contents server 100 goes to Step 1312. If the process for changing the display frequency has not been terminated (NO in Step 1302), the contents server 100 makes up a display frequency change table 1400, searches the advertisement management table 300, and stores values in the advertisement IDs 1402, the contents IDs 1404, the current display ratios 1406 and the judgement results 1408 for advertisements belonging to the same advertisement group (Step 1304). The judgement results 1204 of the advertisement contents are stored in the corresponding judgement results 1408. 1.0 is stored in the judgement results 1408 of advertisement contents which are not registered in the judgement table 1200. In addition, for the advertisements of this group registered in the judgement table 1200, their frequency changes 1206 are changed into processed values. Next, the contents server 100 calculates the correction values 1410 from the current display ratios 1406 and the judgement results 1408 for the respective advertisements (Step 1306). Next, the contents server 100 calculates the changed display ratios 1412 from the correction values 1410 (Step 1308). Each of the changed display ratios 1412 is calculated by ((its correction value 1410)/(the total amount of the correction values))×100. It is thus possible to change the display frequencies reflecting both the current display ratios and the aimed achievement ratios in the advertisement group. In this method, however, extremely low-achieving contents, for example, an advertisement having few clicks may result in a case where only the display ratio of this advertisement becomes exceptionally high. To take measures against such a case, an upper limit may be predetermined in the quantity of change. To calculate the quantity of change more simply, a method of increasing the quantity of change by fixed quantity or step by step regardless of the achievement ratio of the aimed value may be adopted. Although attention is paid to only contents which could not achieve their aimed values in this embodiment, it can be also considered that the display frequencies of contents which have exceeded their aimed value on a large scale are reduced on the contrary. As a result, the display frequencies of contents which are low in the achievement ratios of the aimed values can be increased.

The changed display ratios 1412 calculated thus are registered in the display ratios 306 of the advertisement management table 300 (Step 1310). If other contents are left on the judgement table 1200 (YES in Step 1312), the contents server 100 returns to Step 1302. If no contents are left (NO in Step 1312), the contents server 100 terminates the process.

In a page displayed by using the new advertisement management table 300 corrected thus, it is possible to show more users advertising banners which has not achieved its aimed value. As a result, it is possible to expect increase in the number of clicks.

Although checking is performed upon three sorts of accesses, that is, page access, answer access and click access in this embodiment, accesses having other conditions may be used as targets of the checking. For example, accesses may be classified by attributes of users. In this case, accesses from target users to whom the contents are to be shown are used as standards for judgement. Available examples of the users' attributes include area-zones or time-zones of accesses, access environment, behavioral history in the site, and so on. If personal data can be obtained as in a membership site, more various information such as ages, sexes, occupations, interested subjects, etc. may be used.

Although measures for increasing the access count for contents which have not achieved their aimed values are taken in this embodiment, it may be also considered to take measures for reducing the access count for contents which have achieved their aimed values on the contrary. According to the above-mentioned example of advertising banners, by reducing the exhibition of advertisements which have achieved their aimed values, other advertisements can be shown to more users. When contents directly correspond to a physical substance as those for shopping or offering an event, there is a limit such as the number of goods in stock, a capacity of the place where the event is to be held, and so on. It is therefore necessary not to increase the access count without any restriction but to adjust the access count so as not to increase the count over the limit. As measures for that, it may be considered to reduce the display frequency, to make the page inconspicuous, or to delete links to the page.

Although page replacement or display frequency change is performed evenly upon contents which have not achieved their aimed values in the measure process of this embodiment, it may be considered that measures are taken in accordance with users' attributes in a site where the users' attributes are judged so as to use suitable contents properly. For example, in the case of an advertisement, the advertisement is displayed selectively to target users of the products. Otherwise, it may be considered that the exhibition is reduced to a class of users high in the answering ratio to a questionnaire while a page for urging an answer is prepared for a class of users low in response.

As has been described above, according to the present invention, an actual value and an aimed value are compared about the access count corresponding to generation of a sending value of contents before the time limit of appreciation of the contents. If it is expected that it is difficult to achieve the aimed value, warning can be given to a contents manager. It is therefore possible for the contents manager to take a proper measure for achieving the aimed value.

In addition, according to the present invention, a measure process is predetermined in accordance with the characteristics of the contents. It is therefore possible to take a proper measure promptly when it is difficult to achieve the aimed value.

Thus, according to the present invention, it is possible to manage delivered contents while paying attention to the life cycle of the value of delivered contents to thereby obtain a predetermined expected quantity of a sending value from the information.

## Claims

1. A contents management method in an information delivery system for delivering contents from an information maintainer (100) to information requesters (140) in response to requests from said requesters, wherein said contents management method comprises the steps of:
counting access count of information requesters to said contents from a date of commence of release of said contents up to a predetermined date;
judging whether said access count has reached a predetermined aimed value or not; and
replacing said contents when said access count has not reached said aimed value.

2. A contents management method according to Claim 1, wherein said predetermined date and a date when said judgement is performed are before a date when a value of the information will be lost or reduced thereafter (hereinafter referred to as time limit of appreciation).

3. A contents management method according to Claim 2, wherein said access count is a sum of an actual value of the access count till said predetermined date and an estimated value from a date following said predetermined date till said time limit of appreciation.

4. A contents management method according to Claim 1, wherein said contents are page contents, and the page which is being released currently is replaced by an alternative page when said access count has not reached said aimed value.

5. A contents management method according to Claim 1, wherein said contents are contents of an advertising banner, and a plurality of advertising banners in the same advertisement group are displayed in page contents at a predetermined ratio of display frequency.

6. A contents management method according to Claim 5, wherein the access count to said advertising banner is counted as the number of clicks, and the display frequency thereof is changed so that said display frequency increases when said number of clicks has not reached said aimed value.

7. A program stored in a storage medium which can be read by a computer, said program being for managing contents in an information delivery system for delivering contents from an information maintainer (100) to information requesters (140) in response to requests from said requesters, said program comprising the steps of:
(a) referring to the access count from said information requesters to said contents, said access count being counted from a date of commence of release of said contents till a predetermined date;
(b) judging whether said access count has reached a predetermined aimed value or not; and
(c) replacing said contents when said access count has not reached said aimed value.

8. A storage medium for storing a program for managing contents according to Claim 7, wherein said predetermined date and a date when said judgement is performed are before a date when a value of information will be lost or reduced thereafter (hereinafter referred to as time limit of appreciation).

9. A storage medium for storing a program for managing contents according to Claim 7, characterized in said contents are page contents, and said program further comprises a step of replacing the page released currently by an alternative page when said access count has not reached said aimed value.

10. A storage medium for storing a program for managing contents according to Claim 7, wherein said contents are contents of an advertising banner, and said program further comprises a step of displaying a plurality of advertising banners in the same advertisement group in page contents at a predetermined ratio of display frequency, and a step of changing the display frequency thereof so that said display frequency increases when said access count to said advertising banner has not reached said aimed value.
